**Europäisches Patentamt**

(19) **European Patent Office**

**Office européen des brevets**

(11) Numéro de publication: **0 143 691**
**B1**

(12) **FASCICULE DE BREVET EUROPÉEN**

(45) Date de publication du fascicule du brevet:
03.02.88

(51) Int. Cl.⁴: **C 03 B 23/025,** C 03 B 23/03

(21) Numéro de dépôt: **84402261.6**

(22) Date de dépôt: **09.11.84**

(54) Bombage de volumes de verre sur lit de conformation constitué d'éléments tournants.

(30) Priorité: **09.11.83 FR 8317829**

(43) Date de publication de la demande:
**05.06.85 Bulletin 85/23**

(45) Mention de la délivrance du brevet:
**03.02.88 Bulletin 88/5**

(84) Etats contractants désignés:
**BE DE FR GB IT LU NL SE**

(56) Documents cité:
**FR-A-1 474 251**
**FR-A-2 081 821**
**FR-A-2 342 947**
**FR-A-2 407 896**

(73) Titulaire: **SAINT- GOBAIN VITRAGE, Les Miroirs
18, avenue d'Alsace, F-92400 Courbevoie (FR)**
(84) Etats contractants désignés: **BE FR GB IT LU NL SE**

(73) Titulaire: **VEGLA Vereinigte Glaswerke GmbH,
Viktoriaallee 3-5, D-5100 Aachen (DE)**
(84) Etats contractants désignés: **DE**

(72) Inventeur: **Halberschmidt, Friedrich, Christian
Derichstrasse 16, D-5120 Herzogenrath (DE)**
Inventeur: **Audi, Josef, Kronenberg 61, D-5100
Aachen (DE)**
Inventeur: **Radermacher, Herbert, Belven 118,
Faeren (BE)**
Inventeur: **Schwarzenberg, Norbert,
Wendelinusstrasse 45, D-5120 Herzogenrath (DE)**

(74) Mandataire: **Leconte, Jean- Gérard, Saint- Gobain
Recherche 39, Quai Lucien Lefranc, F-93304
Aubervilliers Cedex (FR)**

## Description

La présente invention concerne le bombage de volumes de verre portés à température de déformation, défilant en position horizontale ou sensiblement horizontale sur un lit de conformation formé d'éléments de conformation tournants.

Un tel bombage est décrit dans la demande de brevet FR-A-2 312 463. Des volumes de verre avancent sur un lit de conformation constitué de tiges cintrées entourées de gaines déformables entraînées en rotation sur elles-mêmes, ces tiges étant progessivement de plus en plus redressées de façon à bomber les volumes de façon progressive, jusqu'à leur conférer une forme cylindrique. Ce type de bombage est particulièrement facile à obtenir, l'installation est d'un maniement aisé, le rendement est élevé.

La demande de brevet FR-A-2 442 219 décrit une installation dérivée de la précédente, grâce à laquelle les volumes de verre acquièrent un double bombage, c'est à dire un bombage transversal du même type que celui décrit précédemment en épousant le profil de tiges cintrées identiques à celles décrites ci-dessus, disposées transversalement à la direction de leur progression, mais en plus un bombage longitudinal, c'est à dire dans la direction de leur progression, du au fait que les tiges cintrées sont disposées les unes à la suite des autres dans la direction de la progression des volumes de verre, suivant un profil courbe. Il en résulte pour les volumes de verre un double bombage ou autrement dit, un bombage sphérique.

Ces procédés et dispositifs connus, formant la base pour les revendications 1 et 3, ne permettent pas de bomber des volumes de verre autrement que suivant une configuration purement cylindrique ou purement sphérique.

En outre, la courbure des volumes de verre étant directement fonction des réglages de l'installation: inclinaison des tiges cintrées, profil de courbure longitudinale, etc..., l'obtention de courbures déterminées bien précises nécessite une précision et une surveillance des réglages tout au long du poste de bombage.

La présente invention vise à améliorer les procédés et les dispositifs de l'art antérieur de façon à permettre l'obtention de volumes de verre bombés suivant n'importe quelle configuration, éventuellement différente d'une configuration cylindrique ou sphérique, et ce avec des tolérances très étroites et une qualité satisfaisante du point de vue optique, en étant malgré tout moins tributaire de la constance et de la précision des réglages.

Pour cela, elle propose dans une première phase de bomber des volumes de verre à l'aide des moyens classiques tels que des premiers éléments de conformation tournants constitués de premières tiges cintrées entourées de premières gaines tournantes, suivant un profil cylindrique ou sphérique, dans une seconde phase de soumettre ces volumes à un bombage complémentaire par passage entre les deux moules d'une presse de bombage, le moule inférieur de cette presse étant en position de repos abaissé en dessous de la surface de contact des derniers éléments de conformation tournants et pouvant être amené en position active au dessus de cette surface pour être en contact avec le moule supérieur de la presse de bombage, puis de redescendre les volumes de verre ainsi bombés sur les derniers éléments de conformation tournants en vue de les transporter dans le poste de traitement suivant.

Avantageusement, entre les éléments de conformation tournants est soufflé verticalement, du bas vers le haut, un courant de gaz chaud, l'air en général, présentant un profil de pression dynamique unifome, en vue de prendre en charge au moins en partie, le poids des volumes de verre posés sur les éléments de conformation tournants.

L'invention propose également un dispositif pour la mise en oeuvre du procédé décrit ci-dessus, ce dispositif comportant un lit de conformation constitué d'éléments de conformation tournants, ceux de la portion dernière du lit de conformation présentant des espaces dans lesquels est logé un moule inférieur d'une presse de bombage, sous la surface de contact du verre avec lesdits éléments de conformation tournant lorsqu'il est au repos, ce moule étant associé à des moyens de levage aptes à l'élever au dessus de cette surface, pour l'amener contre un mole supérieur complémentaire appartenant à la même presse de bombage.

Avantageusement, au moins sous la portion dernière du lit de conformation est disposée une chambre de soufflage de gaz chaud en direction des volumes de verre.

Grâce au soutien des volumes de verre, fourni par le soufflage de gaz, la pression d'appui desdits volumes sur les éléments de conformation tournants est très fortement réduite. Le courant de gaz chaud a avantageusement une vitesse d'écoulement telle que la pression dynamique au niveau du verre est comprise entre 2 et 30 mm de colonne d'eau; il en résulte une prise en charge du poids du verre pouvant aller jusqu'à environ 80 % de ce poids.

Les derniers éléments de conformation peuvent donc sans inconvénient être réalisés avec des évidements, fournissant ainsi au verre des zones de contact séparées par des espaces, au lieu du support continu que fournissent les premiers éléments de conformation normaux. Ces éléments de conformation dans la portion dernière du lit de conformation sont constitués de dernières tiges cintrées recouvertes de dernières gaines tournantes éventuellement plus étroites que les gaines habituelles, munies de bagues.

Les zones des dernières tiges cintrées exemptes de bagues permettent alors aisément de loger, en dessous de la surface de contact avec les volumes de verre, le moule inférieur de la presse constitué uniquement d'un cadre. Par contre, rien ne s'oppose à ce que le contre-moule, c'est à dire le moule supérieur soit une surface continue.

On peut ainsi fabriquer des vitrages ayant des formes de courbures qui s'écartent de la courbure simplement cylindrique ou sphérique, ayant une qualité optique élevée, et avec un rendement élevé.

Un point particulièrement important de l'invention réside dans la formation du courant de gaz, lequel doit posséder au niveau du verre, un profil de pression dynamique très uniforme. Ce gaz est soufflé à une température supérieure à 600°C, et il est avantageusement aspiré sur le dessus en vue d'un recyclage.

D'autres détails et d'autres réalisations avantageuses de l'invention seront décrites dans la description qui va suivre faite en liaison avec les figures qui représentent:

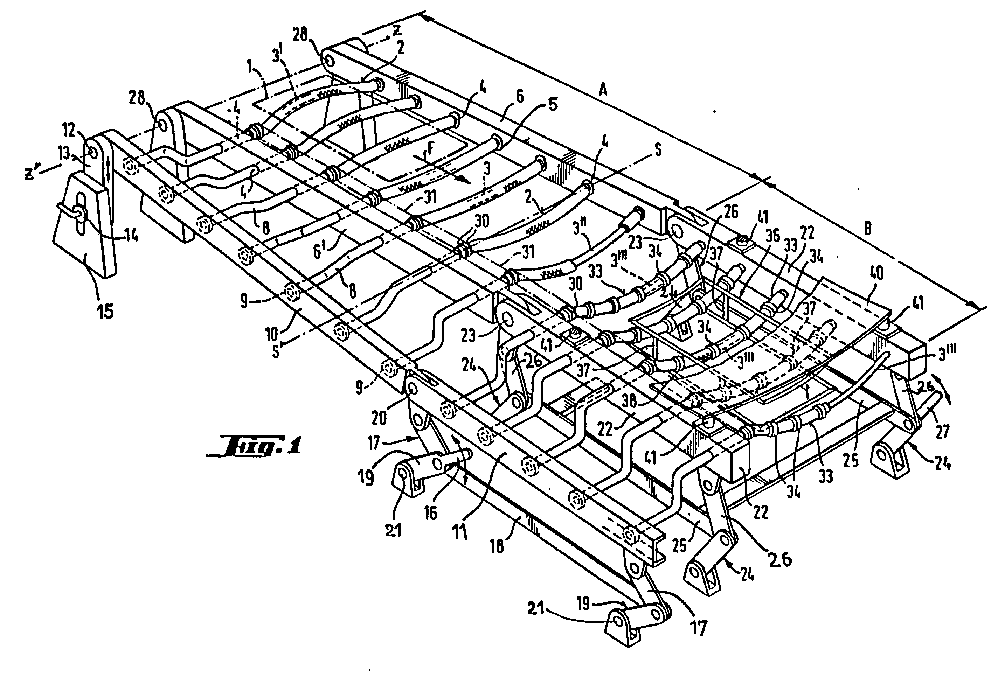

. figure 1: une vue d'ensemble en perspective d'un lit de conformation formé de gaines tubulaires tournantes montées sur des tiges cintrées à inclinaison variable, et comportant dans sa dernière partie un dispositif de bombage complémentaire constitué d'un moule en forme de cadre et d'un contre-moule à surface pleine.

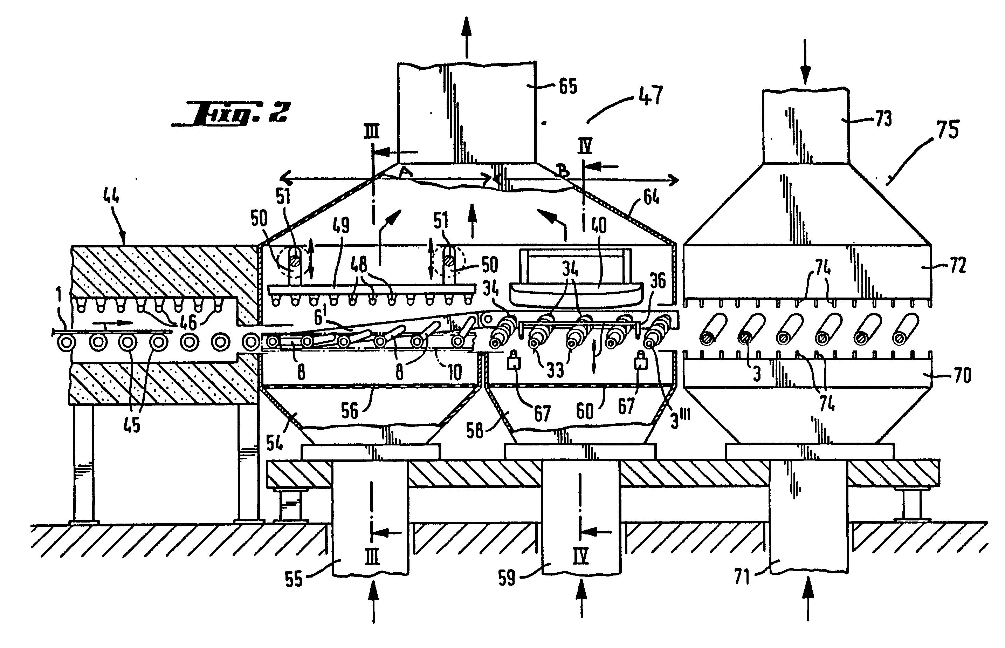

. figure 2: une coupe longitudinale d'une installation de bombage conforme à l'invention y compris le poste de chauffage et de refroidissement.

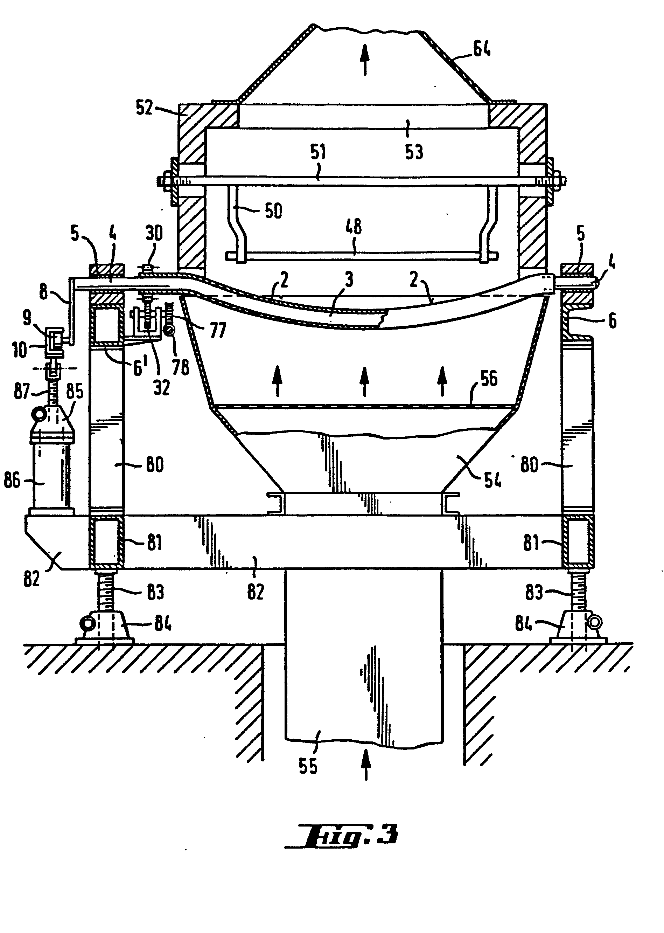

. figure 3: une coupe verticale suivant la ligne III - III de la figure 2 montrant le poste de bombage dans sa première partie.

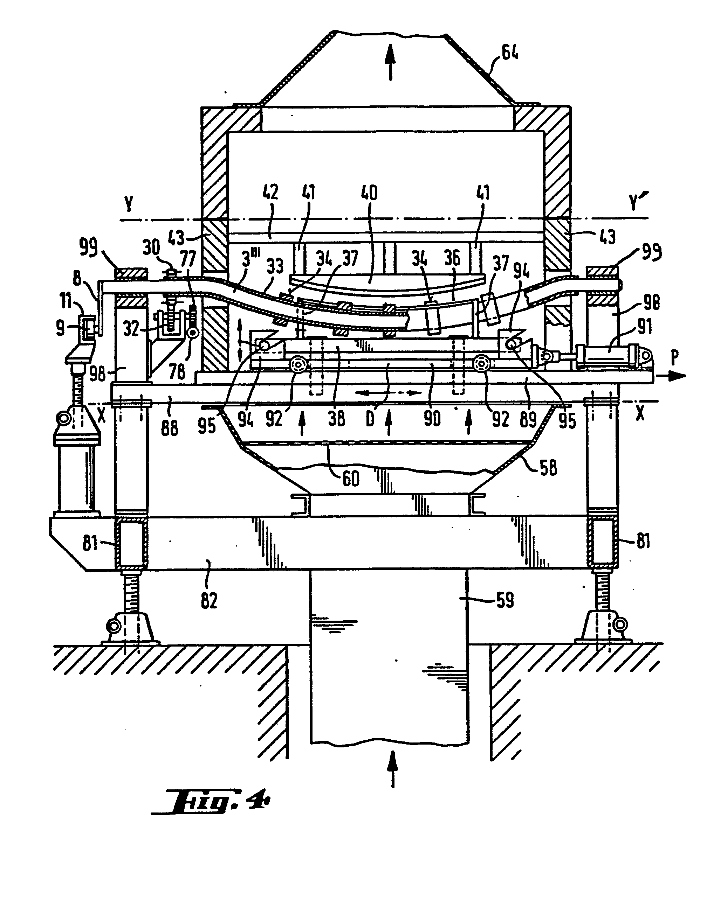

. figure 4: une coupe verticale de la partie finale du poste de bombage, suivant la ligne IV - IV de la figure 2.

La figure 1 illustre la structure de base d'une installation de bombage conforme à l'invention. Toutefois, pour plus de clarté du dessin, le four dans lequel est disposée ladite installation, ainsi que les moyens nécessaires à la production du flux ascendant de gaz chaud dans sa dernière partie, ne sont pas représentés.

Dans cette installation, des volumes de verre 1 reposant sur des éléments de conformation tournants constitutifs d'un lit de conformation, sont transportés dans le sens de la flèche F. Ces éléments de conformation tournants sont des gaines tubulaires flexibles 2, tournant sur elles-mêmes autour de tiges cintrées 3. Dans l'exemple de réalisation montré, toutes les tiges cintrées 3 ont la même forme et le même rayon de courbure. Chaque tige cintrée 3 possède deux extrémités 4, redressées par rapport à la partie médiane cintrée de façon à être dans le prolongement l'une de l'autre, déterminant ainsi un axe de pivotement S - S' autour duquel on peut incliner la tige 3. Les extrémités 4 des tiges 3 sont portées par un chassis constitué de deux poutres longitudinales 6 et 6' et ces extrémités 4 sont libres de pivoter dans des paliers 5 appartenant à ces poutres 6 et 6'. A l'extérieur du chassis 6 - 6' chaque tige cintrée est emmanchée par une des ses extrémités sur une manivelle 8 terminée par un galet 9 qui peut rouler dans un rail à section en U, disposé longitudinalement, c'est à dire dans la direction de progression de volumes de verre 1 représentée par la flèche F, référencé 10 dans une première partie A de l'installation et référencé 11 dans une seconde partie B faisant suite à la première.

Ces tiges cintrées sont progressivement de plus en plus inclinées de façon à présenter aux volumes de verre 1 une courbure dans la direction transversale, de plus en plus importante. Ainsi, la première tige cintrée de la partie A, référencée 3' et appartenant au groupe des tiges cintrées 3 est pratiquement couchée dans le plan de transport qui contient les volumes de verre arrivant en amont de l'installation, si bien que la ligne de contact de cette première tige 3' avec les volumes de verre 1 est pratiquement dans ce plan de transport. Au fur et à mesure que l'on progresse dans l'installation, la position angulaire des tiges cintrées 3 se modifie et elles sont de plus en plus inclinées jusqu'à atteindre l'inclinaison maximale au niveau de la dernière tige cintrée 3 de la partie A, tige référencée 3''. Cette inclinaison maximale dépend du rayon de courbure souhaité pour les volumes de verre 1.

Dans notre réalisation le lit de conformation est un lit concave.

Pour modifier simultanément la position de l'ensemble des tiges cintrées 3 de façon à leur donner une inclinaison dont l'angle varie progressivement et régulièrement d'une tige à l'autre, le rail 10 est monté inclinable par rapport au plan du chassis 6 - 6'. Pour cela, il est muni d'une articulation 12 lui permettant de pivoter autour d'un axe horizontal Z Z' disposé transversalement en tête de l'installation de bombage. Cette articulation 12 est généralement réglable en hauteur; elle est portée par un bras 13 blocable à la hauteur désirée par rapport à un élément 15 du bâti général, grâce à une vis 14. Un levier 16 appartenant à un mécanisme d'articulation à genouillères 17, 18, 19 décrit plus en détail ci-après, sert à assurer le pivotement du rail 10 autour de l'axe Z Z'. Le rail 11 dans lequel roulent les galets 9 d'extrémité des tiges cintrées 3 dans la partie B de l'installation, s'articule sur un pivot 20 appartenant à l'extrémité aval du rail 10. Il est mobile en hauteur, tout en restant parallèle à lui-même, notamment en restant horizontal, par action sur le levier 16, lequel commande la déformation de deux parallèlogrammes contigus, le premier formé par une bielle 18, deux biellettes 17 attachées chacune à deux points distants du rail 11, cette portion de rail 11 constituant le quatrième côté, le second formé par la bielle 18 commune aux deux parallèlogrammes un bras 19 et le levier 16, le quatrième coté étant constitué par une portion de bâti non référencée située entre deux points fixes 21 d'attache d'une part du bras 19 d'autre part du levier 16.

En raison du déplacement forcément parallèle à lui-même, du rail 11, l'inclinaison de toutes les tiges cintrées montées dans la partie B de l'installation de montage et référencées 3''' du fait de leur appartenance à cette partie B, se modifie de la même valeur, de sorte que toutes ces tiges cintrées 3''' ont la même inclinaison, inclinaison identique par ailleurs à celle de la tige cintrée 3'', dernière tige cintrée 3 de la partie A du lit de conformation.

En lieu et place du mécanisme d'articulation à genouillères 16, 17, 18, 19, on pourrait bien entendu utiliser d'autres moyens permettant un réglage en hauteur progressif du rail 11 et une inclinaison progressive du rail 10.

Les tiges cintrées 3''' de la partie B du lit de conformation sont montées pivotantes dans un chassis 22 qui s'articule autour des articulations 23 sur l'extrémité aval du chassis 6 - 6' de la partie A du lit de conformation. Ce chassis 22 est monté sur un mécanisme d'articulation à genouillères 24, 25, 26, du même type que celui qui porte le rail 11. Ce mécanisme 24, 25, 26, peut être actionné par un levier 27, ce qui déplace le chassis 22 parallèlement à lui-même dans le sens de la hauteur, et ce qui modifie également l'inclinaison du chassis 6 - 6' de la première partie A du lit de conformation en le faisant pivoter autour des articulations 28, situées en tête de l'installation sur l'axe Z Z'.

Ainsi grâce à ces réglages on peut simplement modifier le rayon de courbure du lit de conformation.

Grâce à ces réglages on peut également choisir de conserver au même niveau horizontal soit les bords longitudinaux des volumes de verre, soit la zone proche de l'axe central desdits volumes.

Comme déjà signalé, des gaines métalliques tubulaires flexibles 2 résistant à la torsion recouvrent les tiges cintrées 3 et sont entraînées en rotation sur elles-mêmes autour de ces tiges 3, grâce à des pignons dentés 30 dont elles sont solidaires et qui engrènent sur une ou plusieurs chaines 31.

Les gaines tubulaires flexibles qui recouvrent également les tiges cintrées 3''' de la portion B du lit de conformation sont référencées 33. Des bagues 34 sont enfilées et fixées sur ces gaines 33. Ces bagues 34 qui peuvent être étroites, ou plus longues et ressembler à de véritables portions de rouleaux cylindriques sont coulissantes sur les gaines 33 dans la direction longitudinale de celles-ci, ce qui permet de les fixer à n'importe quel endroit sur lesdites gaines. Grâce à cet agencement, subsistent entre les gaines 33 et les bagues 34 associées, sous les volumes de verre 1 transportés en appui sur les bagues 34, des espaces dans lesquels se logent les longerons d'un moule 36, en forme de cadre notamment, appartenant à une presse de bombage. Le moule 36 est monté sur un chassis 38 par l'intermédiaire de supports 37, lequel chassis 38 est mobile en hauteur sous l'action de moyens de levage non représentés. Un contre-moule 40, à surface pleine est prévu au dessus du moule inférieur 36 qui peut être soulevé de manière à être pressé contre ledit moule supérieur 40. Ce contre-moule 40 qui n'est représenté que partiellement pour ne pas surcharger la figure, repose par l'intermédiaire d'appuis 41 sur le chassis 22.

Les tiges cintrées déterminant un lit de conformation concave, le contre-moule 40 est convexe.

La figure 2 montre comment une installation de bombage conforme à l'invention et semblable à celle décrite en relaticn avec la figure 1, est intégrée dans une ligne industrielle de fabrication de vitrages bombés et trempés.

La ligne complète comprend un four 44 de réchauffage des volumes de verre 1, comportant des rouleaux transporteurs cylindriques 45 entraînés en rotation et des éléments de chauffage 46 grâce auxquels le verre est porté à sa température de bombage, une installation de bombage 47 telle que décrite précédemment en relation avec la figure 1 et un poste de trempe 75.

Dans la première partie A de l'installation de bombage, pour plus de clarté du dessin, seuls la poutre 6' du chassis 6 - 6' portant les tiges cintrées 3, lesdites tiges 3 et le rail 10 dans lequel roulent les galets 9 sont représentés. Les mécanismes permettant de régler la position du chassis 6 - 6' ainsi que celle du rail 10 sont omis et ne seront repris que plus loin en relation avec la figure 3.

Des moyens 48 de chauffage par rayonnement sont prévus dans cette portion A de l'installation de bombage et sont maintenus par des supports 49, 50, 51.

En desscus de cette portion A est prévu un soufflage d'air chaud à température d'environ 650° C en vue d'aider à la sustentation des volumes de verre 1.

Pour cela, une enceinte 54 en forme d'entonnoir alimentée en air chaud par le bas à l'aide d'un conduit d'alimentation 55, recouverte à sa partie supérieure par une plaque 56 percée de trous disposés régulièrement, est disposée sous cette portion A à distance du chemin emprunté par les volumes de verre 1. Le débit d'air claud est réglé par des ventilateurs non représentés. Un flux d'air chaud présentant, au niveau de la face inférieure des volumes de verre 1 qui défilent en appui sur les gaines tubulaires 2 recouvrant les tiges cintrées 3, une pression à profil homogène et uniforme, de l'ordre de 2 à 30 mm de colonne d'eau, à composante pratiquement uniquement dynamique, est ainsi créé. Il en résulte la prise en charge par ce flux d'air chaud, d'une partie pouvant être importante du poids des volumes de verre 1.

D'une manière analogue, en dessous de la portion B du lit de conformation, dans laquelle pour plus de clarté du dessin seuls les gaines tubulaires 33, les bagues 34 prévues sur ces gaines 33, le moule inférieur 36 en forme de cadre ainsi que le contre-moule supérieur 40 sont représentés, est disposée une enceinte 58 en forme d'entonnoir alimentée en air chaud à environ 650° C à sa partie inférieure par un conduit d'alimentation 59. Une plaque perforée 60 ferme cette enceinte 58 à sa partie supérieure et assure la distribution d'un courant d'air chaud vertical, ascendant en direction des volumes de verre 1, qui soit homogène et uniforme au niveau desdits volumes de verre. Ce courant d'air chaud agit en opposition au poids des volumes de verre 1, de sorte que les bagues 34 ne sont que très légèrement chargées par ces volumes de verre 1 et n'ont ainsi aucune influence néfaste.

Au dessus de l'ensemble de ce poste de bombage est monté une hotte 64 reliée à un conduit d'évacuation 65, destinée à aspirer les courants d'air chaud émis au travers des plaques perforées 56 et 60.

Avantageusement, ce gaz chaud récupéré dans le conduit 65 est véhiculé dans des gaines non représentées, recyclé et après réchauffage, ramené dans les enceintes 54 et 58 par les conduits 55 et 59.

A l'intérieur de la deuxième portion B du lit de conformation sont prévus des détecteurs 67 qui commandent le positionnement correct des volumes de verre 1 entre les deux moules inférieur 36 et supérieur 40 de la presse de bombage. Dès qu'un volume de verre 1 se trouve exactement au-dessus du moule inférieur 36, les moyens de levage du chassis 38 supportant le moule 36 sont actionnés, ce qui a pour effet de presser le volume de verre 1 contre le contre-moule 40 à surface pleine pour lui donner sa forme finale. Le moule inférieur 36 est abaissé et ramené dans sa position initiale dans les espaces ménagés entre les bagues 34. Le volume de verre 1 est de ce fait à nouveau déposé sur les bagues 34 qui tournent et qui le transportent dans le poste de trempe 75 situé en aval.

Dans le poste de trempe 75, le transport des volumes de verre 1 s'effectue de la même manière que dans la première partie A du lit de conformation, c'est à dire sur des gaines tubulaires tournantes 2 en rotation sur elles-mêmes autour de tiges cintrées 3. Sur la figure 2 les moyens de commande des tiges cintrées 3 ne sont pas représentés pour plus de clarté. Le poste de trempe 75 comporte essentiellement un caisson inférieur de soufflage 70 alimenté en air froid sous pression par une conduite d'alimentation 71 et un caisson supérieur 72 alimenté en air froid sous pression par une conduite d'alimentation 73. L'air froid est débité de façon classique par des rampes de buses tubulaires 74 ou des buses à fente et le refroidissement subi par les volumes de verre entraîne leur trempe.

La structure et le fonctionnement de la ligne de fabrication de vitrages bombés et trempés, en particulier au niveau de la première partie A de l'installation de bombage seront détaillés à nouveau ci-après en relation avec la figure 3.

La figure 3 montre les tiges cintrées 3 dont les extrémités alignées 4 tourillonnent dans les paliers 5 appartenant au chassis 6 - 6'. Ces tiges cintrées 3 sont maintenues dans la position angulaire souhaitée par les manivelles équipées des galets 9 engagés dans le rail en U 10. Les gaines tubulaires 2 sont montées sur ces tiges 3 et les pignons dentés 30 solidaires desdites gaines, engrenant sur des roues dentées 32 reliées à des pignons 77 eux-mêmes en prise sur des vis sans fin 78 couplées à un arbre moteur, les entraînent en rotation.

Le chassis 6 - 6' portant le lit de conformation est monté par des supports 80 sur un cadre 81, 82. Ce cadre 81, 82 est posé sur les tiges 83 de vérins 84 qui permettent un réglage en hauteur.

De façon identique, le rail 10 peut être réglé en hauteur à l'aide d'un vérin 85. Le vérin 85 s'appuie par l'intermédiaire de l'élément d'appui 86 sur le cadre 81, 82 et agit sur le rail 10 par l'intermédiaire de sa tige 87.

Au-dessus des tiges cintrées 3 sont disposés les moyens de chauffage 48 accrochés par les supports 50, 51 à la partie 52 en matière réfractaire de la chambre qui enveloppe la partie A du poste de bombage.

Dans la paroi supérieure de cette structure 52 est ménagée une large ouverture 53 par laquelle l'air chaud aidant à la sustentation des volumes de verre 1, parvient à la hotte d'aspiration 64. Cet air chaud pénètre par le conduit d'alimentation 55 dans l'enceinte 54 en forme d'entonnoir couverte par plaque de distribution perforée 56.

La dernière partie B du poste de bombage équipée de la presse de bombage est montrée en détail sur la figure 4. Dans la réalisation particulière montrée, la presse de bombage est prévue pour être changée rapidement en cas de changement du modèle de vitrage fabriqué, la nouvelle presse remise en place ayant la forme du nouveau modèle de vitrages à fabriquer. Cette partie B est alors considérée comme une unité interchangeable.

L'ensemble des moyens de bombage de la partie B, c'est à dire les tiges cintrées 3''' revêtues de leurs gaines tubulaires flexibles 33 et de leurs bagues 34, ainsi que les moules inférieur 36 et supérieur 40 de la presse de bombage sont portés par un chassis 88 qui peut être sorti de l'installation par une translation suivant la flèche P et qui se sépare de ladite installation au niveau bas, selon un plan X - X', au niveau haut selon un plan Y - Y'.

Lors de l'extraction des moyens de bombage, les galets 9 d'extrémité des manivelles 8 se dégagent aussi du rail 10 en forme de U.

Le chassis 88 est équipé de barres 89 sur lesquelles roule un chariot 90 équipé de roues 92, suivant la direction définie par la double flèche D, sous l'action d'un vérin pneumatique 91. Ce chariot 90 porte des plots 94 munis de fentes obliques, dans lesquelles peuvent coulisser des ergots horizontaux 95 appartenant au chassis 38 porteur du moule inférieur 36. Par action du vérin 91, le chassis 38 est amené à monter ou à descendre, les ergots 95 étant assujettis à glisser dans les fentes obliques des plots 94.

Le contre-moule 40 est accroché par des pièces 41 à des profilés de support 42 qui sont fixés aux parois latérales 43 de la chambre qui enveloppe la partie B du poste de bombage. Ces parois latérales 43 reposent elles aussi sur le chassis 88, de la même façon que le chassis 98, porteur des paliers 99, dans lesquels tourillonnent les tiges cintrées 3'''.

Dans cette portion B du poste de bombage, les moyens de production, de distribution et de guidage du courant de gaz aidant à la sustentation des volume de verre 1 sont particulièrement importants.

On obtient de bons résultats lorsque l'air servant à la sustentation est chauffé par des moyens de chauffage situés en dessous de l'enceinte 58 en forme d'entonnoir, à une température de 620 à 660°C. Dans l'enceinte 58, la surpression est réglée en fonction de la pression désirée au niveau des volumes de verre, celle-ci étant fonction du poids des volumes de verre, et de la fraction de ce poids que l'on désire prendre en charge. Cette pression au niveau du verre est pratiquement uniquement dynamique, et on règle la surpression dans l'enceinte 58 entre 10 et 60 mm de colonne d'eau (C.E.) et de préférence entre 15 et 30 mm C.E., par exemple 25 mm C.E. (soit 250 Pa). Avec de telles surpressions, on peut constater au niveau du verre des pressions de 2 à 30 mm C.E., capables de prendre en charge de 20 à 80 % du poids des volumes de verre.

La plaque perforée 60 est située à distance des volumes de verre 1 de façon que la pression ressentie par lesdits volumes de verre soit pratiquement exclusivement dynamique, la composante statique étant négligeable. Des distances de 100 à 250 mm ou 300 mm seront couramment pratiquées.

Les perforations de la plaque 60 ont un diamètre de 12 à 15 mm et sont réparties suivant un pas régulier dans les deux directions transversale et longitudinale, de 25 à 35 mm.

Ainsi les jets d'air sortant des performations se rejoignent et se recouvrent partiellement, fournissant au niveau du verre un flux homogène et uniforme.

Les paramètres de pression, distance, diamètre des perforations sont bien entendu identiques pour la première partie A du poste de bombage.

L'invention décrite vaut également pour des installations de bombage dans lesquelles chaque tige cintrée 3 possède son propre système de réglage d'inclinaison.

L'invention vaut également pour des installations dans lesquelles les tiges 3 ne sont pas toutes identiques, mais présentent des courbures différentes.

De la même façon, la presse de bombage et/ou le système de soufflage d'air chaud pour aider à la sustentation des volumes de verre peuvent être employés dans une installation conférant à la fois une courbure transversale et une courbure longitudinale aux volumes de verre. Dans ce cas les paliers dans lesquels tourillonnent les tiges cintrées ne sont plus alignés, mais disposés sur un chassis courbe dans la direction longitudinale d'avancement des volumes de verre.

**Revendications**

1. Procédé pour bomber des volumes de verre (1) dans une position horizontale, dans lequel les volumes de verre, après avoir atteint la température de bombage sont transportés sur un lit de conformation possèdant des éléments de conformation tournants (2; 33-34), cintrés dans la direction transversale du lit de conformation, caractérisé en ce que dans une dernière partie (B) du lit de conformation, les volumes de verre sont pressés à leur forme définitive dans une presse de bombage comportant un moule inférieur (36) en forme de cadre, abaissé en position de repos en dessous de la surface de contact des derniers éléments de conformation (33-34) avec les volumes de verre et un contre-moule supérieur (40) à surface pleine disposé au dessus du lit de conformation, le moule inférieur (36) étant amené au moment du pressage contre le contre-moule supérieur (40), puis redescendu en position de repos.

2. Procédé selon la revendication 1 caractérisé en ce qu'entre les éléments de conformation (2; 33-34) on dirige contre la face inférieure des volumes de verre (1) un courant de gaz chaud, ascendant présentant au niveau du verre une pression dynamique homogène et uniforme apte à prendre en charge partiellement le poids des volumes de verre.

3. Installation de bombage pour la mise en oeuvre du procédé selon l'une des revendications 1 ou 2 comportant un lit de conformation à éléments de conformation tournants (2; 33-34), cintrés dans la direction transversale perpendiculaire à la direction longitudinale de transport des volumes de verre (1), caractérisée en ce que dans la dernière partie (B) du lit de conformation les derniers éléments de conformation tournants (33-34) présentent des espaces en dessous de la surface de contact de ces éléments de conformation (33-34) avec les volumes de verre dans lesquels un moule (36) d'une presse de bombage, en forme de cadre est logé en position de repos, ce moule (36) pouvant être soulevé par des moyens de levage pour être amené, dans une position de travail située au-dessus des derniers éléments de conformation (33-34), contre un contre-moule (40) à surface pleine convexe, appartenant à la presse de bombage.

4. Installation selon la revendication 3 caractérisée en ce qu'en dessous de la dernière partie (B) du lit de conformation est disposée une enceinte (58) contenant du gaz chaud sous pression et émettant des jets dudit gaz en direction de la face inférieure des volumes de verre (1).

5. Installation selon la revendication 4 caractérisée en ce que l'enceinte (58) contenant du gaz chaud est fermée à sa partie supérieure par une plaque (60) perforée qui se situe à une distance de l'ordre de 100 à 300 mm en dessous de la surface de contact des derniers éléments de conformation tournants (33-34) avec les volumes de verre (1).

6. Installation selon l'une des revendications 4 à 5 caractérisée en ce qu'au-dessus de la dernière portion (B) du lit de conformation est montée une hotte d'aspiration (64) pour le gaz chaud, ce gaz chaud récupéré étant retourné par des gaines jusqu'à l'enceinte d'où il est émis.

7. Installation selon l'une des revendicaticns 3 à 6 caractérisée en ce que les derniers éléments de conformation tournants (33-36) sont formés de dernières gaines tubulaires flexibles (33) qui tournent sur elles-mêmes autour de dernières tiges cintrées (3'''), et de bagues (34) enfilées sur ces derniers gaines tubulaires, des espaces étant ménagés entre ces bagues (34) dans lesquels se loge le cadre du moule inférieur (36) de la presse de bombage.

8. Installation selon la revendicaticn 7 caractérisée en ce que les bagues (34) sont montées coulissantes sur les dernières gaines tubulaires (33) et peuvent être déplacées le long desdites gaines et fixées dans la position appropriée.

9. Installation selon l'une des revendications 7 ou 8 caractérisée en ce que les tiges cintrées (3, 3''') présentent une courbure déterminée et qu'elles sont montées inclinables autour de leurs extrémités formant axe de pivotement, la variation de leur inclinaison entraînant la variation de la courbure du lit de conformation.

10. Installation selon l'une quelconque des revendications 3 à 9, caractérisée en ce que le lit de conformation comporte une première partie (A) à rayon de courbure croissant dans le sens de la progression des volumes de verre (1) formée de premiers éléments de conformation (2) tournants, et une seconde partie (B) à rayon de courbure constant.

11. Installation selon l'une quelconque des revendications 3 à 10, caractérisée en ce que dans la partie (B) du lit de conformation équipée du moule (36) en forme de cadre appartenant à la presse de bombage, sont prévus des détecteurs (67) commandant le positionnement correct des volumes de verre (1) au-dessus du moule (36) et déclenchant la mise en action des moyens de levage dudit moule (36) lorsque le positionnement est correct.

12. Installation selon l'une quelconque des revendications 3 à 11, caractérisée en ce que la partie (B) du lit de conformation équipée de la presse de bombage est une unité interchangeable.

13. Installation selon la revendication 12, caractérisée en ce que cette partie (B) interchangeable possède un chassis (88) qui porte les supports (98) des paliers (99) pour les dernières tiges cintrées 3''', revêtues de leurs dernières gaines tubulaires (33) et des galets (34), les parois latérales (43) de la chambre fermant cette partie (B), le moule supérieur (40) et le moule inférieur (36) de la presse de bombage, ainsi que le chassis (38) portant le moule inférieur (36).

**Patentansprüche**

1. Verfahren zum Biegen von Glasscheiben (1) in horizontaler Lage, bei dem die Glasscheiben nach Erreichen der Biegetemperatur über ein Formbett aus rotierenden, quer zum Formbett gewölbten Formelementen (2, 33-34) transportiert werden, dadurch gekennzeichnet, daß die Glasscheiben im letzten Abschnitt (B) des Formbetts in einer eine untere, in ihrer Ruhestellung unterhalb der Kontaktfläche der letzten Formelemente (33-34) mit den Glasscheiben abgesenkte Rahmenbiegeform (36) und eine obere, oberhalb des Formbetts angeordnete vollflächige Biegeform (40) umfassenden Biegepresse in ihre endgültige Form gepreßt werden, wobei die untere Rahmenbiegeform (36) beim Preßvorgang gegen die obere Gegenform (40) angehoben und anschließend wieder in ihre Ruhestellung verbracht wird.

2. Verfahren nach Anspruch 1, dadurch gekennzeichnet, daß zwischen den Formelementen (2;33-34) gegen die untere Oberfläche der Glasscheiben (1) ein heißer aufsteigender Gasstrom gerichtet wird, der auf der Höhe des Glases einen homogenen und einheitlichen dynamischen Druck aufweist und geeignet ist, einen Teil des Eigengewichts der Glasscheiben zu kompensieren.

3. Biegevorrichtung zur Durchführung des Verfahrens nach Anspruch 1 oder 2 mit einem Formbett aus rotierenden, quer zur Transportrichtung der Glasscheiben (1) gewölbten Formelementen (2;33-34), dadurch gekennzeichnet, daß im letzten Abschnitt (B) des Formbetts die letzten rotierenden Formelemente (33-34) unterhalb der Kontaktfläche dieser Formelemente (33-34) mit den Glasscheiben Vertiefungen aufweisen, in denen eine rahmenförmige Biegeform (36) in ihrer Ruhestellung angeordnet ist, und daß diese Biegeform (36) durch Hubvorrichtungen anhebbar und in ihrer Arbeitsstellung oberhalb der letzten Formelemente (33-34) gegen eine konvexe vollflächige, zur Biegepresse gehörende Gegenform (40) verbringbar ist.

4. Vorrichung nach Anspruch 3, dadurch gekennzeichnet, daß unterhalb des letzten Formbettabschnitts (B) ein Behälter (58) angeordnet ist, der heißes Gas unter Überdruck enthält und Strahlen dieses Gases in Richtung auf die untere Oberfläche der Glasscheiben abgibt.

5. Vorrichtung nach Anspruch 4, dadurch gekennzeichnet, daß der das heiße Gas enthaltende Behälter (58) auf seiner oberen Seite durch eine Lochplatte (60) abgeschlossen ist, die sich in einem Abstand von größenordnungsmäßig 100 bis 300 mm unterhalb der Kontaktfläche der letzten sich drehenden Formelemente (33-34) mit den Glasscheiben (1) befindet.

6. Vorrichtung nach Anspruch 4 oder 5, dadurch gekennzeichnet, daß oberhalb des letzten Formbettabschnitts (B) eine Abzugshaube (64) for das heiße Gas angeordnet ist, durch die das heiße Gas aufgefangen und durch Rohrleitungen zu dem Behälter, aus dem es ausströmt, zurückgeleitet wird.

7. Vorrichtung nach einem der Ansprüche 3 bis 6, dadurch gekennzeichnet, daß die letzten sich drehenden Formelemente (33-34) aus letzten biegsamen Hülsen (33) bestehen, die sich auf gebogenen letzten Rundstäben (3''') drehen, und daß auf diesen letzten biegsamen Hülsen Ringe (34) angeordnet sind, zwischen denen Zwischenräume gebildet sind, in denen die untere Rahmenbiegeform (36) der Biegepresse angeordnet ist.

8. Vorrichtung nach Anspruch 7, dadurch gekennzeichnet, daß die Ringe (34) auf den letzten biegsamen Hülsen (33) verschiebbar angeordnet sind und entlang dieser Hülsen verschoben und in der gewünschten Stellung festgelegt werden können.

9. Vorrichtung nach Anspruch 7 oder 8, dadurch gekennzeichnet, daß die gebogenen Rundstäbe (3,3''') eine vorbestimmte Krümmung aufweisen, und daß sie mit einer um ihre die Drehachse bildenden Endabschnitte verstellbaren Neigung angeordnet sind, wobei die Veränderung ihrer Neigung die Veränderung der Wölbung des Formbetts bewirkt.

10. Vorrichtung nach einem der Ansprüche 3 bis 9, dadurch gekennzeichnet, daß das Formbett einen ersten Abschnitt (A) mit in Bewegungsrichtung der Glasscheiben (1) zunehmender Krümmung aufweist, das aus ersten sich drehenden Formelementen (2) gebildet wird, sowie einen zweiten Abschnitt (B) mit gleichbleibender Krümmung.

11. Vorrichtung nach einem der Ansprüche 3 bis 10, dadurch gekennzeichnet, daß innerhalb des mit der zu der Biegepresse gehörenden Rahmenbiegeform (36) versehenen Formbettabschnitts (B) Tastvorrichtungen (67) angeordnet sind, die die genaue Positionierung der Glasscheiben (1) oberhalb der Form (36) steuern und die Hubeinrichtungen zum Anheben der Form (36) einschalten, wenn die Positionierung stimmt.

12. Vorrichtung nach einem der Ansprüche 3 bis 11, dadurch gekennzeichnet, daß der mit der Biegepresse versehene Abschnitt (B) des Formbetts eine auswechselbare Einheit ist.

13. Vorrichtung nach Anspruch 12, dadurch gekennzeichnet, daß der auswechselbare Abschnitt (B) einen tragenden Rahmen (88) aufweist, auf dem die Stützen (98) der Lager (99) für die letzten, mit den letzten biegsamen Hülsen (33) und den Ringen (34) versehenen gebogenen Rundstäbe (3'''), die seitlichen Abschlußwände (43) der diesen Abschnitt (B) abschließenden Kammer, die obere Biegeform (40) der Biegepresse, die untere Biegeform (36) der Biegepresse und der die untere Biegeform (36) tragende Rahmen (38) angeordnet sind.

## Claims

1. A method of curving volumes of glass (1) in a horizontal position, in which the volumes of glass, after reaching the curving temperature are transported on a shaping bed having rotatable shaping elements (2; 33-34) which are curved in the transverse direction of the shaping bed, characterised in that in a last part (B) of the shaping bed, the glass volumes are pressed to their required shape in a curving press comprising a lower mould (36) shaped as a frame, lowered in its rest position below the surface of contact of the last shaping elements (33-34) with the glass volumes and an upper counter-mould (40) having a continuous surface arranged above the shaping bed, the lower mould (36) being brought on pressing against the upper counter-mould (40) and then lowered to its rest position.

2. A method according to claim 1, characterised in that between the shaping elements (2; 33-34) there is directed, against the lower surface of the glass volumes (1) a flow of ascending hot gas having at the level of the glass, a homogeneous uniform dynamic pressure capable of partially supporting the weight of the glass volumes.

3. Curving apparatus for carrying out a method according to claim 1 or 2, comprising a shaping bed having rotatable shaping elements (2; 33-34) curved in the transverse direction perpendicular to the longitudinal direction of transport of the glass volumes (1), characterised in that in the last part (B) of the shaping bed the last rotatable shaping elements (33-34) have spaces below the surface of contact of these shaping elements (33-34) with the glass volumes in which a mould (36) of a curving press, shaped as a frame is mounted in a rest position, the mould (36) being liftable by lifting means to be brought to a working position situated above the last shaping elements (33-34), against a counter-mould (40) having a continuous convex surface, belonging to the curving press.

4. Apparatus according to claim 3, characterised in that below the last part (B) of the shaping bed there is arranged an enclosure (58) containing hot gas under pressure and emitting jets of said gas in the direction of the lower surface of the glass volumes (1).

5. Apparatus according to claim 4, characterised in that the enclosure (58) containing the hot gas is closed at its upper part by a perforated plate (60) situated at a distance of the order of 100 to 300 mm below the surface of contact of the last rotatable shaping elements (33-34) with the glass volumes (1).

8. Apparatus according to claim 4 or 5, characterised in that above the last portion (B) of the shaping bed there is mounted an aspiration hood (64) for the hot gas, the hot gas recovered being returned through ducts to the enclosure from which it is emitted.

7. Apparatus according to one of claims 3 to 6, characterised in that the last rotatable shaping elements (33-34) are formed of the last flexible tubular sheaths (33) rotatable on themselves about the last curved rods (3'''), and rings (34) threaded on the last tubular sheaths, spaces being provided between the rings (34) in which the frame of the lower mould (36) of the curving press is mounted.

8. Apparatus according to claim 7, characterised in that the rings (34) are mounted to slide on the last tubular sheaths (33) and may be displaced along said sheaths and fixed in an appropriate position.

9. Apparatus according to claim 7 or 8, characterised in that the curved rods (3, 3''') have a predetermined curvature and are inclinably mounted about their ends forming an axis for pivoting, variation in their inclination producing variation of the curvature of the shaping bed.

10. Apparatus according to any one of claims 3 to 9, characterised in that the shaping bed comprises a first part (A) of increasing curvature in the direction of progress of the glass volumes (1) formed of the first rotatable shaping elements (2), and a second part (B) having a constant radius of curvature.

11. Apparatus according to any one of claims 3 to 10, characterised in that in the part (B) of the shaping bed provided with a frame-shaped mould (36) belonging to the curving press, there are provided detectors (67) controlling correct positioning of the glass volumes (1) above the mould (36) and actuating lifting means for the mould (36) when the positioning is correct.

12. Apparatus according to any one of claims 3 to 11, characterised in that the part (B) of the shaping bed of the curving press is an interchangeable unit.

13. Apparatus according to claim 12, characterised in that the interchangeable part (B) comprises a chassis (88) which carries supports (98) for bearings (99) for the last curved rods 3''', covered by the last tubular sheaths (33) and wheels (34), the lateral walls (43) of the chamber closing this part (B), the upper mould (40), the lower mould (36) of the curving press and the chassis (38) carrying the lower mould (36).

Fig. 1

0 143 691

Fig. 2

*Fig.3*

_Fig. 4_